# FASCICULE DE BREVET EUROPEEN

(11) **EP 3 380 311 B1**
(45) Date de publication et mention de la délivrance du brevet: **06.11.2019**
(21) Numéro de dépôt: 16813077.1
(22) Date de dépôt: 14.11.2016
(51) Int. Cl.: B29D 12/02, G06F 17/50

(54) **PROCÉDÉ DE FABRICATION D'UNE MONTURE DE LUNETTES SUR MESURE**
VERFAHREN ZUR HERSTELLUNG EINER MASSGESCHNEIDERTEN BRILLENFASSUNG
METHOD FOR MANUFACTURING MADE-TO-MEASURE SPECTACLES FRAME

(30) Priorité: 26.11.2015 FR 1502470
(43) Date de publication de la demande: 03.10.2018
(73) Titulaire: AK Optique, 75015 Paris (FR)
(72) Inventeur: KAUFFMAN, Adrien, 75015 Paris (FR)
(74) Mandataire: Fédit-Loriot
(86) Numéro de dépôt international: PCT/FR2016/000193
(87) Numéro de publication internationale: WO 2017/089660

(56) Documents cités:
- DE-A1-102009 004 380
- US-A1- 2015 127 132
- US-A1- 2015 277 155

## Description

L'invention a trait à la fabrication des montures de lunettes.

Dans leur très grande majorité, les montures de lunettes sont fabriquées de manière industrielle. Le porteur choisit généralement sa monture parmi une collection mise à sa disposition par un opticien qui, lorsque les lunettes sont destinées à corriger la vue du porteur, est ensuite chargé de détourer une paire de lentilles ophtalmiques au contour de la monture choisie.

Les critères retenus pour le choix de la monture sont l'esthétique et le confort. Comme ces deux critères sont rarement réunis en raison de la très grande diversité des visages, le choix d'une monture peut s'avérer fastidieux.

La fabrication d'une monture sur mesure se heurte à deux difficultés : d'une part, elle requiert un certain savoir-faire, qui s'est peu à peu perdu au profit de l'automatisation ; d'autre part, les porteurs sont généralement pressés et peu enclins à se prêter aux mesures que l'opticien devrait prendre sur leur visage (notamment l'écartement des yeux, l'écart temporal, la forme du nez, la position des oreilles, la profondeur des pommettes).

Cependant, certains prétendent proposer une fabrication sur mesure, grâce à la mise en oeuvre deux technologies récentes : la numérisation tridimensionnelle (plus couramment dénommée scan 3D), et l'impression tridimensionnelle (également dénommée impression 3D).

Ainsi, la demande internationale PCT publiée sous le numéro WO 2013/149891 (Luxexcel) propose une machine pour fabriquer des lunettes sur mesure, qui comprend un scanner configuré pour numériser au moins en partie le visage du porteur, et une unité de production configurée pour imprimer une lentille et/ou une monture de lunettes en fonction des données issues du scanner.

Ce document demeure très vague, et il est même complètement muet sur les détails de la procédure à suivre pour réaliser concrètement une monture de lunettes, se bornant à indiquer que le porteur est supposé choisir dans la machine parmi une gamme de modèles de base, ou dessiner lui-même sa monture.

Le document US-A-2015/127132 décrit par ailleurs un procédé ayant les caractéristiques du préambule de la revendication 1. Un objectif est par conséquent de proposer une procédure concrète permettant effectivement de fabriquer une monture de lunettes sur mesure pour un porteur à l'aide d'un scanner et d'une imprimante.

A cet effet, il est proposé, en premier lieu, un procédé de fabrication d'une face de monture de lunettes pour un porteur, qui comprend :
- une phase d'acquisition optique de données spatiales relatives au visage du porteur ;
- une phase de conception, à partir de ces données, d'un modèle virtuel tridimensionnel de la de monture, cette phase de conception comprenant les opérations suivantes, conduites au sein d'un système de conception assistée par ordinateur :
   - chargement d'un modèle virtuel tridimensionnel de visage construit à partir des données spatiales issues de la phase d'acquisition ;
   - chargement ou tracé, dans un plan de face, d'une esquisse définissant les contours de la face de monture ;
   - à partir du modèle virtuel tridimensionnel de visage :
      ∘ chargement ou tracé, dans un plan horizontal, d'une esquisse primaire suivant la courbure du visage vu dans ce plan ;
      ∘ chargement ou tracé, dans un plan vertical parallèle à un plan de relative symétrie du visage, d'une esquisse secondaire suivant la courbure du visage vu dans ce plan,
   - construction d'une nappe tridimensionnelle s'appuyant à la fois sur l'esquisse primaire et sur l'esquisse secondaire ;
   - obtention d'une ébauche de la face de monture par découpe, dans la nappe, de la projection de son esquisse sur celle-ci perpendiculairement au plan de face.
- une phase de réalisation de la face de monture par fabrication additive à partir de ce modèle virtuel.

L'opération de construction de la nappe tridimensionnelle peut comprendre :
- la construction d'une nappe surfacique par balayage de l'esquisse primaire sur l'esquisse secondaire ou réciproquement ;
- l'épaississement de la nappe surfacique.

La phase de conception peut comprendre la réalisation, dans l'ébauche de la face de monture, d'une gorge destinée à accueillir une lentille.

Selon un premier mode d'exécution, la réalisation de cette gorge comprend :
- la conversion d'une arête de l'ébauche en courbe fermée tridimensionnelle ;
- la réalisation d'une surface ayant pour contour cette courbe fermée tridimensionnelle ;
- le décalage de cette surface perpendiculairement au plan de face ;
- l'épaississement de la surface ainsi décalée pour former une nappe tridimensionnelle ;
- le décalage, vers l'extérieur, d'un chant de la nappe pour former une nappe élargie ;
- la soustraction booléenne de cette nappe élargie à l'ébauche de la face de monture.

Selon un deuxième mode d'exécution, la réalisation de la gorge comprend :
- la conversion d'une arête de l'ébauche en courbe fermée tridimensionnelle ;
- le décalage de cette courbe vers l'extérieur ;
- le décalage de cette courbe perpendiculairement au plan de face vers l'intérieur de l'ébauche ;
- l'enlèvement extrudé, dans l'ébauche, de matière s'appuyant sur cette courbe ainsi fermée, effectué perpendiculairement au plan de face.

La phase de conception peut en outre comprendre le chanfreinage ou l'arrondi des arêtes vives de l'ébauche.

La phase de conception peut également comprendre le perçage d'avant-trous dans une face arrière de l'ébauche.

La monture est avantageusement fabriquée dans un polymère.

Il est proposé, en deuxième lieu, un procédé de fabrication d'une paire de lunettes pour un porteur, qui comprend :
- la fabrication d'une face de monture tel que présenté ci-dessus,
- la fourniture ou la fabrication de branches ;
- la fourniture de lentilles brutes,
- le détourage de lentilles au contour de la face de monture,
- le montage des lentilles dans la face de monture.

Ce procédé peut en outre comprendre une phase de conception, à partir du modèle virtuel tridimensionnel de visage, et à partir du modèle virtuel tridimensionnel de face de monture, d'un modèle virtuel tridimensionnel de branche, une phase de réalisation d'une paire de branches à par fabrication additive à partir de ce modèle virtuel, et une phase d'assemblage comprenant la fixation de chaque branche sur la face de monture au moyen d'une charnière.

D'autres objets et avantages de l'invention apparaîtront à la lumière de la description d'un mode de réalisation, faite ci-après en référence aux dessins annexés dans lesquels :
- la figure 1 est une vue schématique en perspective montrant une installation permettant la fabrication de montures de lunettes sur mesure ;
- la figure 2 est une capture d'écran à partir d'un système de conception assistée par ordinateur, montrant, en vue de face, un modèle tridimensionnel de visage scanné, sur lequel est superposée une esquisse d'une face de monture ;
- la figure 3 est une capture d'écran montrant, en perspective, le modèle tridimensionnel de visage et l'esquisse de la face de monture de la figure 2 ;
- la figure 4 est une capture d'écran montrant, en vue de dessus, le modèle tridimensionnel de visage et une esquisse primaire suivant la courbure du visage dans un plan horizontal ;
- la figure 5 est un détail, à échelle agrandie, de la figure 4, inclus dans le médaillon V ;
- la figure 6 est une capture d'écran montrant, en perspective, le modèle tridimensionnel de visage et l'esquisse primaire ;
- la figure 7 est une capture d'écran montrant, en vue de côté, le modèle tridimensionnel de visage et une esquisse secondaire suivant la courbure du visage dans un plan vertical ;
- la figure 8 est une capture d'écran montrant, en perspective, le modèle tridimensionnel de visage ainsi que l'esquisse primaire et l'esquisse secondaire ;
- la figure 9 est une capture d'écran montrant, en perspective, une nappe tridimensionnelle générée à partir de l'esquisse primaire et l'esquisse secondaire, avec, en superposition, l'esquisse de la face de monture ;
- la figure 10 est une capture d'écran illustrant la génération, à partir de l'esquisse de monture et de la nappe illustrée sur la figure 9, d'un modèle tridimensionnel de face de monture ;
- la figure 11 est une vue en perspective montrant une ébauche de modèle tridimensionnel de face de monture issu de la génération illustrée sur la figure 10 ;
- les figures 12, 13 et 14, 15, 16 et 17 sont des captures d'écran illustrant, en perspective, le modèle de face de monture et illustrant différentes opérations successives aboutissant à la génération d'une gorge dans le modèle de face de monture, pour le montage d'une lentille ;
- la figure 18 est une capture d'écran montrant, en perspective, une partie du modèle de face monture et une esquisse pour la génération d'appui nasaux sur la face de monture ;
- la figure 19 est une vue en perspective montrant l'ébauche du modèle tridimensionnel de face de monture incluant des appuis nasaux générés à l'aide de l'esquisse illustrée sur la figure 18 ;
- la figure 20 est une capture d'écran illustrant, en perspective, la superposition de l'ébauche de modèle de face de monture et du modèle de visage ;
- la figure 21 est une vue en perspective du modèle de face de monture après différentes opérations de finition ; des médaillons illustrent des détails à plus grande échelle ;
- la figure 22 est une capture d'écran montrant, en vue de côté, le modèle de visage avec, sur lequel est superposée une esquisse de branche ;
- la figure 23 est une vue en perspective montrant le modèle de branche généré à partir de l'esquisse illustrée sur la figure 22 avec, en médaillon, un détail à plus grande échelle ;
- la figure 24 est une vue en perspective montrant une imprimante 3D et illustrant la fabrication directe (par ajout de matière) de la face de monture et des branches ;
- la figure 25 est une vue en perspective illustrant le montage de la monture par assemblage des branches et de la face de monture.

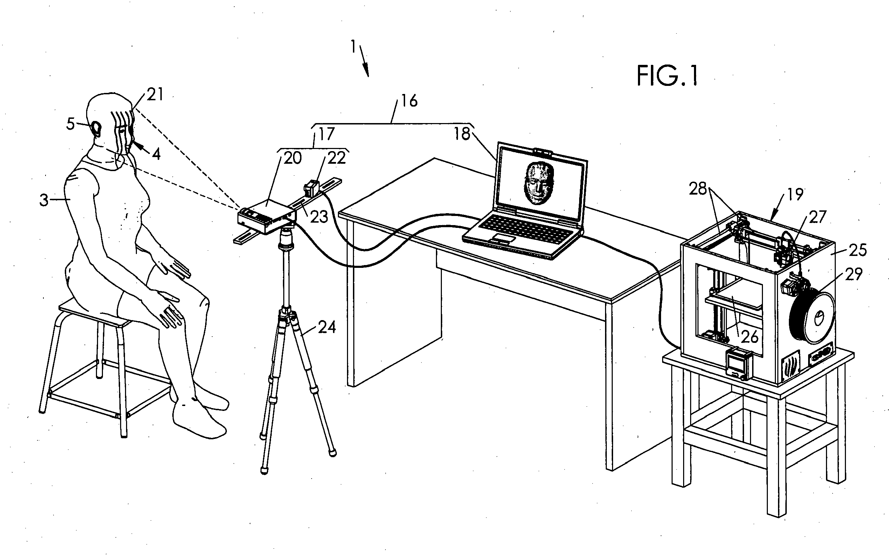

Sur la figure 1 est représentée une installation **1** permettant la fabrication d'une monture **2** de lunettes sur mesure pour un porteur **3,** selon la morphologie de son visage **4.** Dans le présent contexte, le visage **4** ne comprend pas seulement la face du porteur **3** ; il s'étend jusqu'à ses oreilles **5,** dont la forme et la position sont prises en compte pour la fabrication de la monture **2.**

La monture **2** comprend, en premier lieu, une face **6** de monture, qui forme un support dans lequel sont enchâssées des lentilles, également dénommés verres ou optiques (ayant une fonction solaire, c'est-à-dire d'atténuation de la lumière, ou une fonction de correction ophtalmique, ou ces deux fonctions cumulées). Dans ce qui suit, la face **6** de monture est réalisée dans un polymère (par ex. un polymère thermoplastique ou une résine thermodurcissable) mais il est envisageable de la réaliser dans un matériau composite, encore dans un métal, ou encore dans un alliage métallique.

La face **6** de monture définit un cerclage **7** droit dans lequel est destinée à être enchâssée une lentille droite elle-même destinée à être positionnée en regard de l'œil droit du porteur **3,** et un cerclage **8** gauche dans lequel est destinée à être enchâssée une lentille gauche elle-même destinée à être positionnée en regard de l'œil gauche du porteur **3.**

La face **6** de monture comprend un pont **9** qui relie les cerclages **7, 8** et est destiné à venir se positionner sensiblement au niveau de la racine du nez **10** du porteur **3.**

Chaque cerclage **7, 8** intègre un appui **11** nasal qui fait saillie d'une face **12** arrière de la face **6** de monture et est destiné à venir en appui sur une aile du nez **10** du porteur **3.**

La monture **2** comprend, en deuxième lieu, une paire de branches **13** qui, avec les appuis **11** nasaux, contribuent au maintien de la monture **2** sur le visage **4** du porteur **3.**

La monture **2** comprend, en troisième lieu, une paire de charnières **14** pour le montage articulé de chaque branche **13** sur la face **6** de monture. Plus précisément, chaque branche **13** est fixée par l'intermédiaire d'une charnière **14** sur un tenon **15** défini par la face **6** de monture et qui fait saillie latéralement de chaque cerclage **7, 8.**

Par pure commodité, on affecte dans ce qui suit les mêmes références numériques aux objets ou sujets réels (notamment au visage **4** du porteur **3,** à la face **6** de monture et aux branches **13**) et à leur modèle virtuel tridimensionnel.

Comme on le voit sur la figure 1, l'installation **1** comprend :
- un dispositif **16** de numérisation tridimensionnelle, incluant un composant **17** matériel couramment dénommé scanner 3D, et un composant logiciel implémenté dans un ordinateur **18** (typiquement un PC) relié au scanner **17** pour traiter les données issues de celui-ci, et pour reconstruire à partir de ces données un modèle virtuel tridimensionnel de l'objet (ou du sujet) scanné ;
- une imprimante **19** tridimensionnelle, également dénommée imprimante 3D, reliée à l'ordinateur **18** et conçue pour réaliser des pièces par fabrication directe à partir de modèles virtuels tridimensionnels de ces pièces.

Le scanner **17** peut être l'un des nombreux scanners disponibles dans le commerce, dès lors que la résolution du modèle choisi est suffisante. L'objectif étant de scanner un visage humain, on choisira de préférence un scanner capable d'une résolution inférieure ou égale à 1/10^{e} mm, et avantageusement de l'ordre de (ou inférieure à) 1/100^{e} mm.

La technologie employée pour l'acquisition des données importe peu, du moment que son innocuité pour l'être humain peut être garantie. Le scanner **17** peut par exemple utiliser la technologie de la lumière structurée.

Ainsi, dans l'exemple illustré sur la figure 1, le scanner **17** comprend un projecteur **20** vidéo agencé pour projeter sur le sujet (ici le visage **4** du porteur **3**) une lumière structurée (comprenant par ex. un motif **21** constitué d'une alternance de bandes sombres et claires) et une caméra **22** pointant vers le visage **4** ainsi éclairé et agencée pour effectuer plusieurs prises de vue du visage **4** dans différentes orientations (par ex. dans trois orientations angulaires).

Le projecteur **20** et la caméra **22** sont ici montés sur une réglette **23** elle-même fixée sur un trépied **24** qui permet de les positionner à la bonne hauteur vis-à-vis du visage **4** à scanner. Comme illustré sur la figure 1, le scanner **17** peut être positionné face au visage **4** du porteur **3** lorsque celui-ci est assis, ce qui est plus confortable pour lui compte tenu des quelques minutes que peut nécessiter la phase de numérisation de son visage **4.**

Le composant logiciel peut également être un outil du commerce, programmé pour piloter le scanner **17** et la caméra **22** et traiter les informations qui lui sont communiquées par celle-ci pour reconstituer, à partir de ces informations, un modèle **4** tridimensionnel du visage. Cette technologie est aujourd'hui assez au point, et l'on trouve dans le commerce des dispositifs de numérisation en kit, incluant le composant matériel et le composant logiciel, cf. par ex. le modèle SLS-2 commercialisé par la société allemande DAVID Vision Systems Gmbh.

L'imprimante **19** peut elle aussi être une imprimante du commerce. La technologie employée est indifférente : il peut notamment s'agir du dépôt de fil, de la stéréolithographie ou encore du frittage sélectif par laser. Dans l'exemple illustré, il s'agit d'une imprimante **19** à dépôt de fil, qui comprend, grossièrement, une carcasse **25,** un plateau **26** de travail, une ou plusieurs tête(s) **27** d'impression mobile(s) montée(s) sur des coulisses **28** suivant trois axes, et un stock **29** de matière (ici sous forme d'une bobine montée en rotation sur une poupée à l'extérieur de la carcasse **25**). Le matériau employé est généralement un polymère thermoplastique, de préférence biocompatible : ABS (acrylonitrile butadiène styrène) ou PLA (acide polylactique), éventuellement mélangé à des fibres naturelles (par ex. des fibres de bois). Tout autre matériau biocompatible thermoformable peut convenir.

La fabrication de la face **6** de monture comprend trois phases :
- une phase d'acquisition optique de données spatiales relatives au visage **4** du porteur **3** ;
- une phase de conception, à partir de ces données, d'un modèle virtuel tridimensionnel de la face **6** de monture ;
- une phase de réalisation de la face **6** de monture par fabrication additive à partir de ce modèle virtuel.

La phase d'acquisition optique peut être conduite par un opérateur spécialisé (il peut s'agir d'un opticien formé pour cette procédure) au moyen du dispositif **16** de numérisation. Cette phase pourrait également être conduite par le porteur lui-même : à cet effet, le scanner **17** pourrait par exemple être intégré à un ordinateur personnel et les données transmises à distance (par l'intermédiaire d'un réseau de télécommunication) à l'opticien chargé lui-même des phases de conception et de réalisation.

Dans l'exemple illustré, le porteur **3** se tient de préférence immobile, par ex. en position assise. Pour éviter les flous, il peut être préférable de maintenir la tête du porteur **3** au moyen d'un repose-tête ou d'un appuie-tête. Ce dernier peut être intégré à un fauteuil sur lequel est assis le porteur **3.**

Le scanner **17** est positionné en face du visage **4 du** porteur **3.** Un motif **21** lumineux structuré est projeté sur le visage **4** au moyen du projecteur **20,** et une prise de vue de l'image déformée du motif **21** est effectuée à l'aide de la caméra **22,** transmise à l'ordinateur **18** et mémorisée dans celui-ci par le composant logiciel.

Cette prise de vue est répétée plusieurs fois pour couvrir tout le visage **4** (d'une oreille **5** à l'autre). Chaque prise de vue est traitée par le composant logiciel pour déduire de la déformation du motif **21** structuré (suivant les contours du visage **4**) les coordonnées spatiales d'un nuage de points sur le visage **4.** En variante, les données spatiales relatives au visage peuvent être des données vectorielles, par ex. générées par une technique de photogrammétrie.

Les données spatiales (ici le nuage de points) ne reflétant qu'une partie du visage **4**, plusieurs ensembles de données (ici plusieurs nuages de points) issus des prises de vue sont agglomérés et recalés spatialement pour constituer un ensemble de données (ici un nuage de points) de taille supérieure qui forme une première ébauche du visage **4.**

Ces données (ici, les points du nuage) font l'objet d'un retraitement par maillage pour obtenir une surface continue qui constitue in fine un modèle virtuel tridimensionnel du visage **4** du porteur **3.** Le modèle est enregistré en mémoire par l'ordinateur **18** dans un format susceptible d'être lu ou converti par un système de conception assistée par ordinateur. Le modèle peut être, dans un premier temps, chargé à l'écran de l'ordinateur **18** par la composante logicielle du dispositif **16** de numérisation pour permettre à l'opérateur d'en contrôler la qualité (c'est-à-dire la conformité avec le visage **4** réel du porteur) **3.**

La phase de conception est conduite au sein d'un système de conception assistée par ordinateur (CAO), implémenté dans l'ordinateur **18** et programmé pour lire directement le fichier du modèle virtuel de visage **4** construit par le dispositif de numérisation, ou pour convertir ce fichier dans un format de lecture approprié qu'il est capable de lire. Le système de CAO peut être un système disponible dans le commerce, tel que SolidWorks ou Catia (édités par Dassault Systèmes), ou encore Evolve (édité par SolidThinking, Inc).

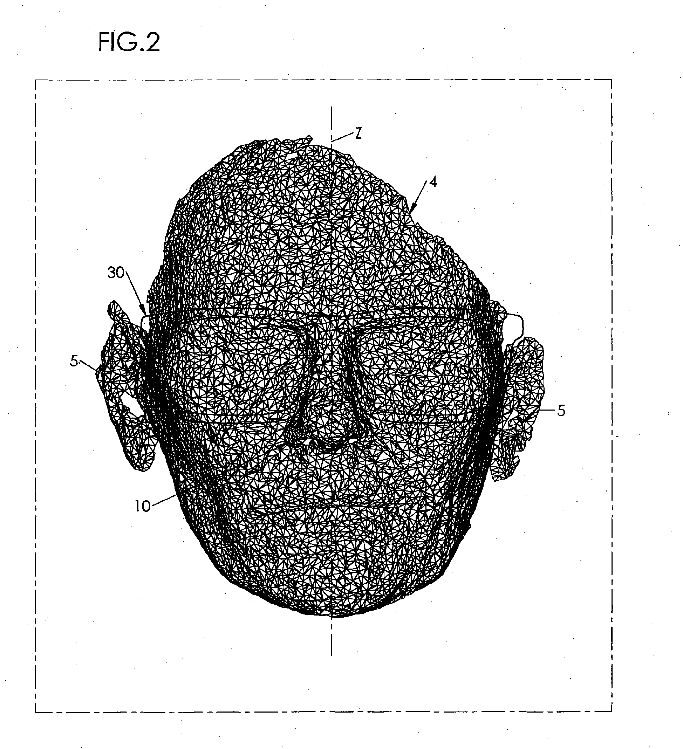

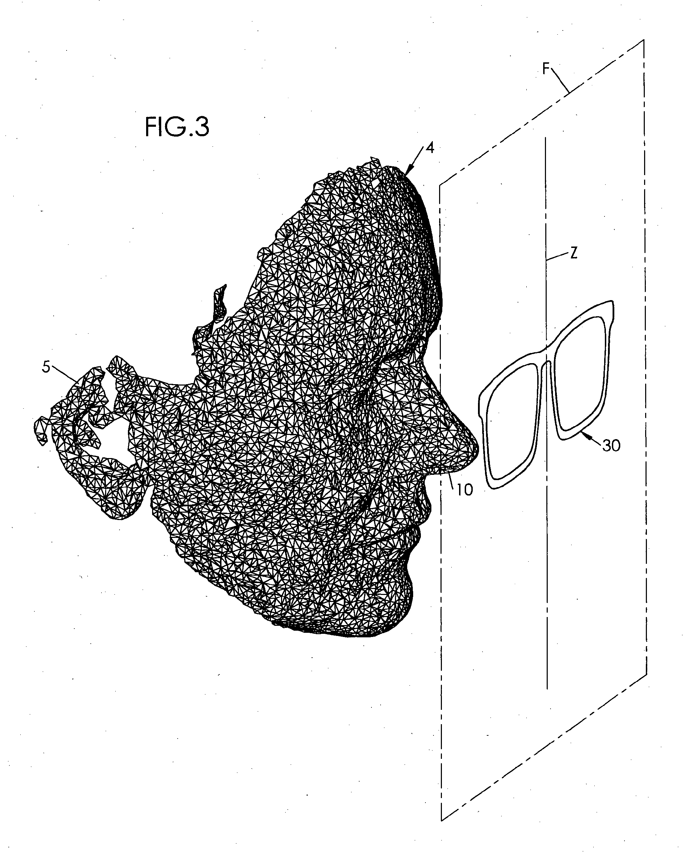

Cette phase de conception comprend, premièrement, une opération de chargement et d'affichage du modèle **4** virtuel de visage dans un environnement de travail généré par le système de CAO, comme illustré sur la figure 2. Sur cette figure (comme sur les figures 3 à 8, 20 et 22), le modèle de visage **4** est affiché selon un mode filaire à faible résolution pour satisfaire aux exigences formelles des offices des brevets. Dans la réalité, le visage **4** peut être (et est, en pratique) affiché selon un mode surfacique et à haute résolution, beaucoup plus réaliste et détaillé.

Ce chargement étant effectué, la phase de conception peut inclure une opération préliminaire de réorientation du visage **4** dans un repère tridimensionnel défini par le système, pour faire coïncider avec celui-ci le repère propre du visage **4** et ainsi faire en sorte qu'une vue de face dans le repère tridimensionnel corresponde à une vue de face du visage **4.** On utilise ici le terme « visage » pour désigner son modèle virtuel tridimensionnel tel que chargé dans l'environnement du système de CAO.

La phase de conception comprend alors une première opération de tracé, dans un plan **F** de face (schématisé sur la figure 2 par un carré en trait mixte), d'une esquisse **30** définissant les contours de la face **6** de monture. L'esquisse **30** peut être tracée au jugé, en fonction de la morphologie du visage **4.** Dans l'exemple illustré, cette esquisse **30** est tracée avec le visage **4** en arrière-plan pour adapter la forme de la face **6** de monture à cette morphologie. Cependant, en variante, il est envisageable de charger et d'afficher un modèle (template) d'esquisse **30** prédéfini, qu'il est ensuite possible de retoucher (par ex. par une mise à l'échelle) pour l'adapter quelque peu au visage **4,** à moins que ce modèle d'esquisse ne convienne directement sans qu'il soit nécessaire de le retoucher.

La plupart des visages étant symétriques (ou à tout le moins relativement symétriques) par rapport à un plan **M** médian vertical, un gain de temps peut être obtenu en traçant le contour d'un cerclage **6** (ou **7**) puis en en réalisant une symétrie par rapport à un axe **Z** vertical de symétrie apparente du visage **4** dans le plan **F** de face, comme illustré sur la figure 2. Le pont **9** joignant les cerclages **7, 8** peut être esquissé après avoir réalisé l'opération de symétrie, ou être à demi esquissé jusqu'à l'axe **Z** de symétrie (l'opération de symétrie complétant alors le pont **9** pour joindre les esquisses des cerclages **7, 8**), ou encore être esquissé jusqu'au voisinage de l'axe **Z** de symétrie, un congé de raccordement étant alors tracé après l'opération de symétrie pour relier les deux côtés symétriques de l'esquisse du pont **9.**

Le plan **F** de face dans lequel est réalisée l'esquisse **30** est de préférence choisi à distance du visage **4,** comme illustré sur la figure 3, de sort à faciliter les autres opérations, telles qu'elles vont être décrites à présent.

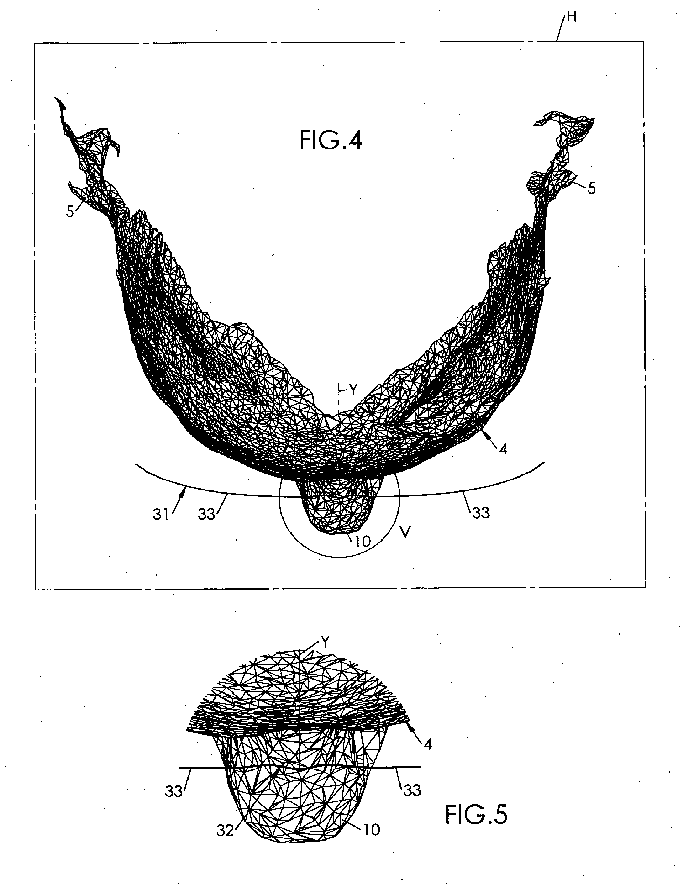

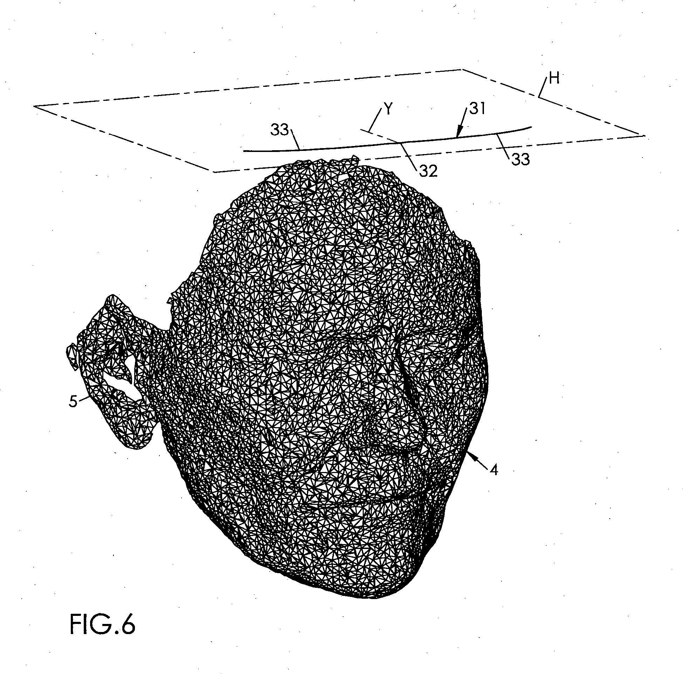

La phase de conception comprend ensuite le tracé, dans un plan **H** horizontal (ou plan de dessus dans l'environnement du système de CAO), d'une esquisse **31** primaire suivant la courbure du visage **4** vu dans ce plan **H,** comme illustré sur les figures 4 et 6 où le plan **H** horizontal est figuré schématiquement par un rectangle en trait mixte (compte tenu de la perspective, ce plan horizontal apparaît sur la figure 6 sous forme d'un parallélogramme aplati).

Comme on le voit sur la figure 4, l'esquisse **32** primaire présente, à l'aplomb du nez **10**, une portion **32** centrale avantageusement bosselée, et une paire de portions **33** latérales courbées qui s'étendent de part et d'autre de la portion **32** centrale en suivant grossièrement le contour du visage **4** tel que vu de dessus. Il n'est pas indispensable (surtout pour une monture **2** destinée à accueillir des lentilles ophtalmiques) de trop cintrer ces portions **33** latérales : la distance normale (c'est-à-dire mesurée parallèlement à un axe **Y** général de symétrie du visage **4** vu de dessus) entre chaque portion **33** latérale et le visage **4** peut, comme dans l'exemple illustré, être croissante en partant de la portion **32** centrale vers l'extérieur, selon une loi empirique qui peut être programmée dans le système CAO, ou selon l'appréciation de l'opérateur.

Le bosselage de la portion **32** centrale vise à dégager, sur le pont **9** de la face **6** de monture, un espace pour l'arête du nez **10.**

En variante, il est possible de charger et d'afficher un modèle (template) prédéfini d'esquisse **31** primaire, déjà mémorisé dans l'ordinateur **18** et qu'il est ensuite possible de retoucher (par ex. par une mise à l'échelle) pour l'adapter quelque peu au visage **4,** à moins que ce modèle d'esquisse **31** primaire ne convienne directement sans qu'il soit nécessaire de le retoucher.

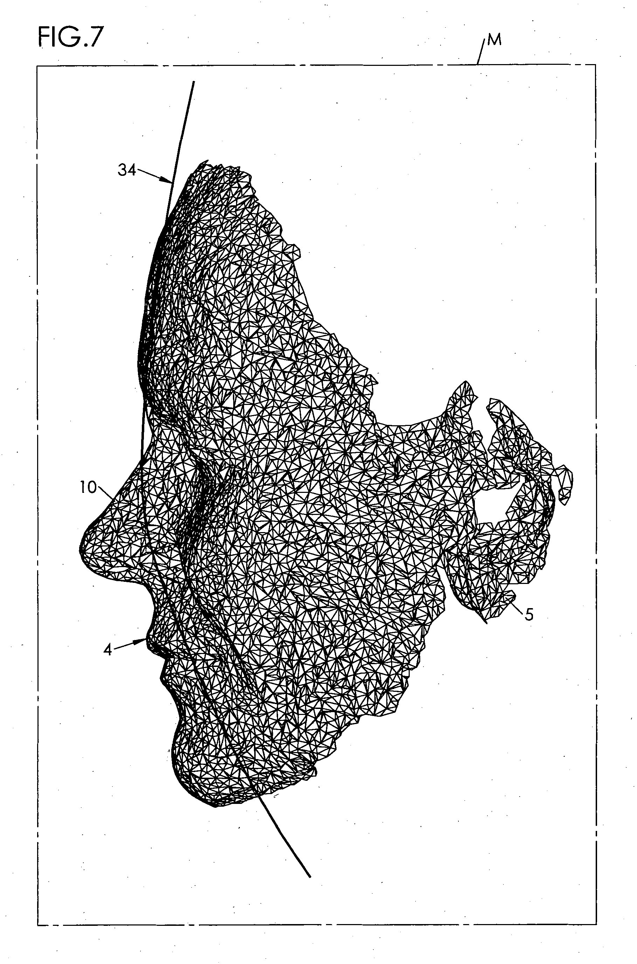

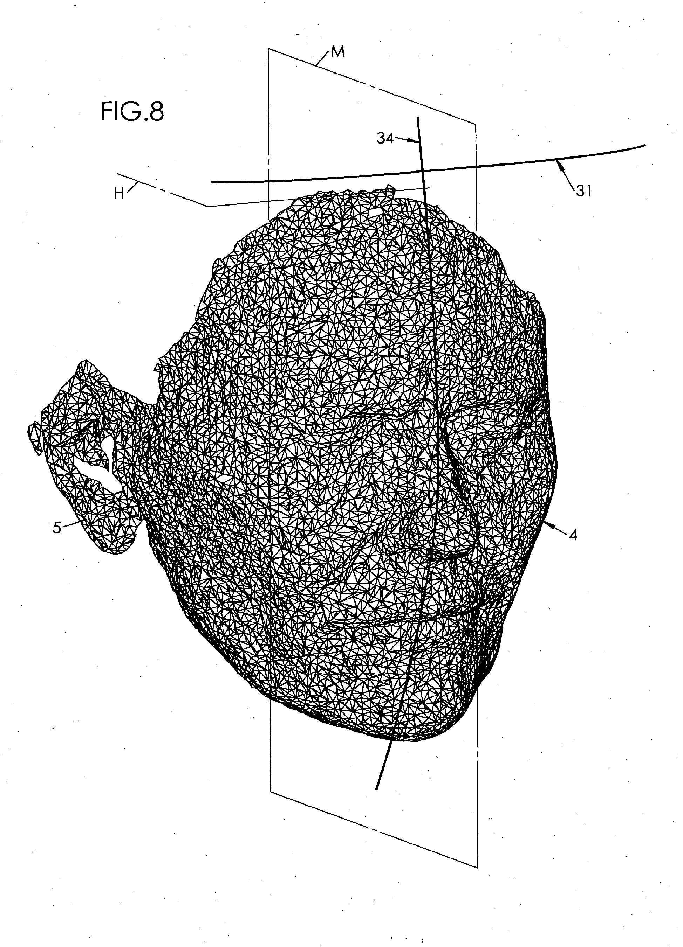

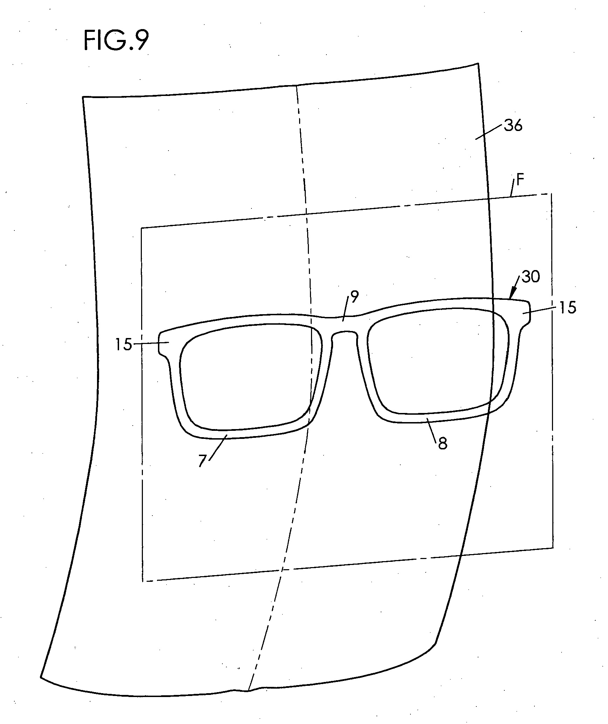

La phase de conception comprend ensuite le tracé, dans un plan vertical parallèle à (ou, comme dans l'exemple illustré sur la figure 8, confondu avec) un plan **M** médian de symétrie du visage **4** (ou de relative symétrie, car dans les faits un visage humain n'est jamais parfaitement symétrique), d'une esquisse **34** secondaire suivant la courbure du visage **4** vue dans ce plan **M** médian, comme illustré sur les figures 7 et 8 où le plan **M** médian est figuré schématiquement par un rectangle en trait mixte (compte tenu de la perspective, ce plan **M** médian apparaît sur la figure 9 sous forme d'un parallélogramme aplati).

En variante, il est possible de charger et d'afficher un modèle (template) prédéfini d'esquisse **34** secondaire, déjà mémorisé dans l'ordinateur **18** et qu'il est ensuite possible de retoucher (par ex. par une mise à l'échelle) pour l'adapter quelque peu au visage **4,** à moins que ce modèle d'esquisse ne convienne directement sans qu'il soit nécessaire de le retoucher.

On notera que les opérations de tracé de l'esquisse **31** primaire et de tracé de l'esquisse **34** secondaire sont indépendantes et peuvent être interverties. De même, bien que ces opérations aient été présentées comme postérieures au tracé de l'esquisse **30** de la face **6** de monture, elles peuvent être réalisées avant cette dernière, sans conséquence pour le bon déroulement de la phase de conception.

L'esquisse **31** primaire et l'esquisse **34** secondaire servent de courbes guides pour la réalisation d'une nappe **35** qui est ensuite employée comme support pour la découpe de la face **6** de monture.

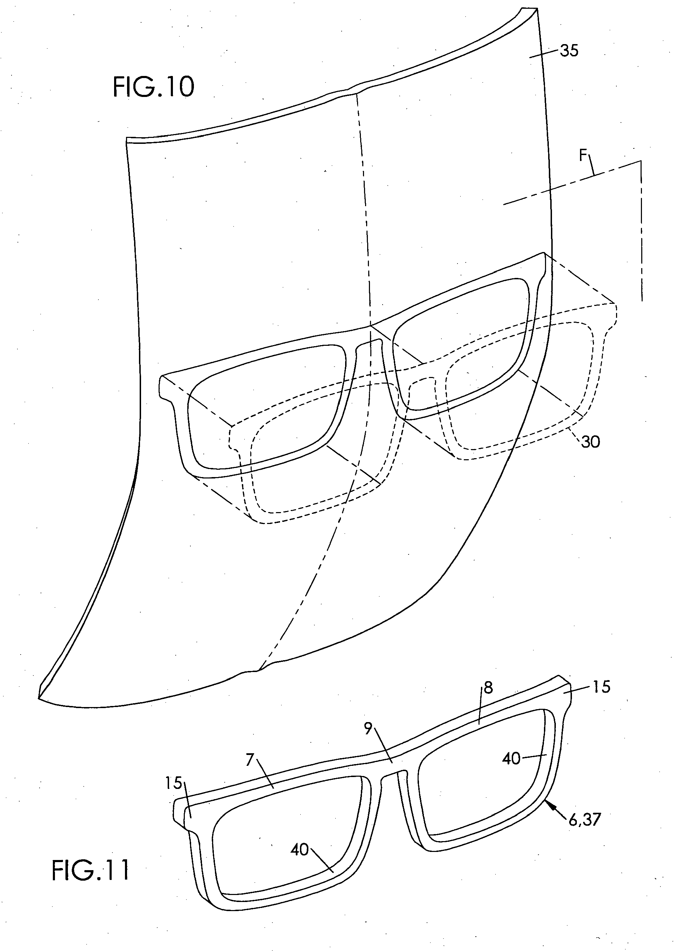

Ainsi, l'étape suivante de la phase de conception est la construction d'une nappe **35** tridimensionnelle s'appuyant à la fois sur l'esquisse **31** primaire et sur l'esquisse **34** secondaire (figures 9, 10).

Selon un premier mode de réalisation, la nappe **35** tridimensionnelle est volumique, c'est-à-dire qu'elle possède une épaisseur.

Certains systèmes de CAO peuvent disposer d'une fonction permettant de générer directement une nappe épaissie, c'est-à-dire ayant un volume ; dans d'autres systèmes, la construction de la nappe doit être conduite en deux étapes : d'abord la génération d'une ébauche **36** surfacique de la nappe **35** (comme illustré sur la figure 9), en utilisant par exemple une fonction de balayage de l'esquisse **34** secondaire sur l'esquisse **31** primaire (ou réciproquement, ce qui revient au même) puis, à partir de cette ébauche **36** surfacique de nappe, la génération de la nappe **35** finale épaissie en utilisant par exemple une fonction épaissir, qui suppose généralement que soit indiquée l'épaisseur attribuée à cette fonction (par ex. 5 mm). Selon les systèmes CAO, la fonction épaisseur peut être réalisée par simple extrusion de la nappe **36** surfacique suivant une direction automatique ou paramétrable, ou encore par un décalage surfacique dans la direction de la normale à la nappe **36** surfacique en chaque point, suivi d'un remplissage du volume compris entre les deux nappes surfaciques, comme dans l'exemple illustré sur la figure 10.

L'opération suivante consiste à générer une ébauche **37** de la face **6** de monture par découpe, dans la nappe **35,** de la projection de son esquisse **30** sur celle-ci perpendiculairement au plan **F** de face, comme illustré sur la figure 10.

Cette découpe peut être réalisée par une fonction d'enlèvement de matière en utilisation une option « basculer côté » pour enlever la matière à l'extérieur de l'esquisse **30.**

Selon un deuxième mode de réalisation, non illustré, la nappe tridimensionnelle est surfacique, c'est-à-dire qu'elle correspond à l'ébauche **37** précitée.

Dans ce cas, il est possible de générer une ébauche surfacique de la face **6** de monture par découpe, dans la nappe surfacique, de la projection de son esquisse **30** sur celle-ci perpendiculairement au plan **F** de face, puis d'épaissir la découpe ainsi réalisée en utilisant la fonction épaissir précitée. En d'autres termes, ce deuxième mode de réalisation consiste à intervertir les fonctions de découpe et d'épaississement du premier mode de réalisation. Ces deux modes de réalisation, qui aboutissent au même résultat, sont équivalents. Ce résultat, à savoir une ébauche **37** de face **6** de monture (à laquelle il manque des gorges ou drageoires **38** pour les lentilles, des appuis **11** nasaux, et des avant-trous **39** dans les tenons **15** pour permettre la fixation des charnières **14**), est illustré sur la figure 11.

Comme on le voit sur la figure 11, chaque cerclage **7**, **8** comprend un bord **40** interne lisse, qui ne permet pas le montage des lentilles.

L'opération suivante est la réalisation, dans l'ébauche de la face de monture, et plus précisément dans le bord **40** interne de chaque cerclage **7**, **8**, d'une gorge (ou drageoire) **38** destinée à accueillir une lentille.

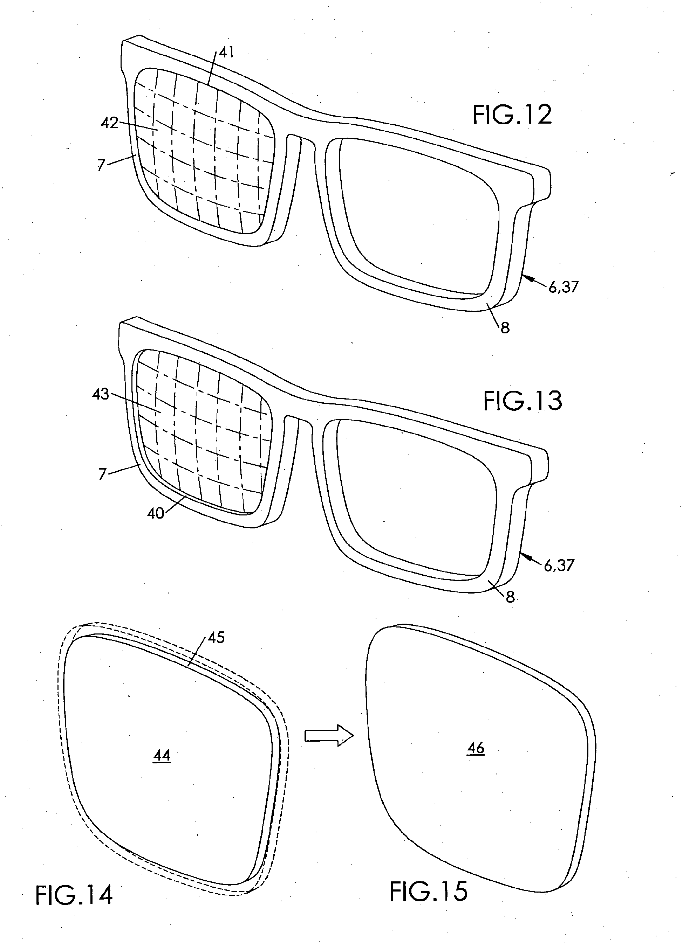

Cette opération nécessite plusieurs étapes, illustrées sur les figures 12 à 17, qui retracent un mode d'exécution non exclusif (il existe des variantes, dont une sera évoquée ci-après).

Une première étape, illustrée sur la figure 12, consiste, à partir d'une arête **41** frontale du bord **40** interne du cerclage **7** ou **8**, à générer une surface **42.** Sur la plupart des systèmes CAO, une telle surface **42** peut être générée par une fonction remplir, qui, à partir d'une courbe tridimensionnelle fermée (en l'espèce l'arête **41** frontale), crée automatiquement une surface réglée délimitée par cette courbe.

Une deuxième étape consiste à décaler cette surface **42** vers l'arrière du cerclage, ou, comme illustré sur la figure 13, à générer à partir de cette surface **42** une surface **43** décalée vers l'arrière du cerclage **7** ou **8.** La valeur du décalage (par ex. de 1,5 mm), mesurée parallèlement à la normale au plan de **F** face, peut être rentrée par l'opérateur dans le système, à moins que celui-ci ne propose une valeur par défaut égale à la valeur souhaitée.

Une troisième étape consiste à épaissir cette surface **43** décalée au moyen d'une fonction extrusion (ou directement au moyen d'une fonction épaissir), d'une valeur égale à la largeur de la gorge **38** que l'on souhaite creuser dans le cerclage **7**, **8** (par ex. de 2 mm). Le résultat est une nappe **44** volumique (visible en trait plein sur la figure 14) qui présente un chant **45** complémentaire du bord **40** interne du cerclage **7** ou **8.**

Une quatrième étape consiste à élargir cette nappe **44** en décalant son chant **45** vers l'extérieur, comme illustré en pointillés sur la figure 14. Cet élargissement, dont le résultat est une nappe **46** élargie illustrée sur la figure 15 comme le suggère la flèche entre les figures 14 et 15, peut être réalisé par la combinaison d'une fonction de décalage de surface appliquée au chant **45,** d'une valeur égale à la profondeur à laquelle on souhaite creuser la gorge (par ex. de 1 à 2 mm), et d'une fonction de remplissage de l'espace créé entre le chant **45** initial de la nappe et le chant ainsi décalé.

Si l'on souhaite chanfreiner les bords de la gorge **38** et/ou l'arrondir au fond, on peut par anticipation appliquer ces fonctions au chant de la nappe **44.**

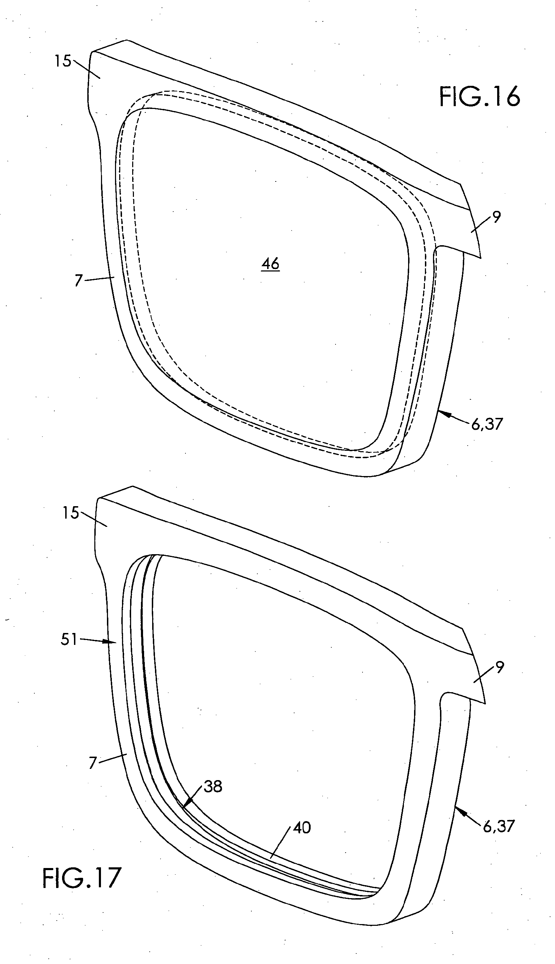

On évitera de fusionner la nappe **46** ainsi élargie avec l'ébauche **37** de face de monture, sans quoi l'étape suivante sera impossible à conduire. En d'autres termes, il est préférable (en l'état actuel de la programmation de la plupart des systèmes de CAO) que l'ébauche **37** de face de monture (en trait plein sur la figure 16) et la nappe **46** ainsi construite (en pointillés sur la figure 16) demeurent deux corps distincts dans l'environnement du système CAO.

Une cinquième étape consiste à soustraire la nappe **46** élargie à l'ébauche **37** de face de monture, en utilisant une fonction booléenne de soustraction qui, dans certains systèmes CAO, est une option proposée au sein une fonction plus générale de combinaison. Le résultat de cette soustraction est le creusement de la gorge **38** dans le cerclage **7** ou **8** (ici le cerclage **7** droit).

Pour creuser la gorge **38** de l'autre cerclage **7** ou **8** (ici le cerclage **8** gauche), il suffit d'opérer une symétrie de la fonction précédente par rapport au plan M médian.

En variante, la réalisation de la gorge **38** est réalisée comme suit.

Une première étape consiste à générer une courbe tridimensionnelle par décalage, vers l'extérieur, de l'arête **41** du cerclage.

Une deuxième étape consiste à procéder directement à un enlèvement de matière extrudé dans le cerclage **7** à partir de cette courbe tridimensionnelle, sur une profondeur (mesurée perpendiculairement au plan **F** de face) déterminée, et en décalant cette profondeur vers l'arrière de manière à centrer sensiblement la gorge par rapport à la face **40** interne du cerclage.

Une étape supplémentaire de chanfreinage ou d'arrondi de la gorge peut être réalisée.

L'opération suivante est la réalisation des appuis **11** nasaux.

Cette opération comprend plusieurs étapes.

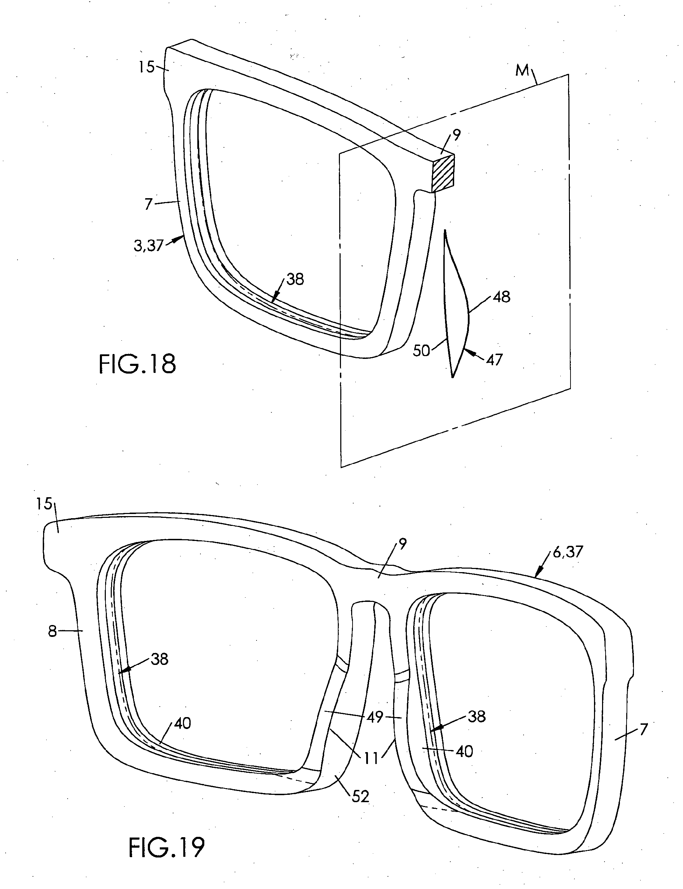

Une première étape consiste (après avoir chargé l'ébauche **37** dépourvue d'appuis nasaux) à tracer une esquisse **47** des appuis **11** nasaux dans un plan parallèle au plan **M** médian, ou directement dans le plan **M** médian, comme illustré sur la figure 18 où le plan **M** médian est schématisé en trait mixte et où pour des raisons de clarté on n'a représenté que le cerclage **7** droit en coupant la face **6** de monture dans le plan **M** médian.

Cette esquisse **47** comprend une courbe **48** arrière qui va délimiter un bord **49** arrière de chaque appui **11** nasal, et une courbe **50** avant qui ne sert qu'à fermer l'esquisse **47** et dont la forme n'a donc que peu d'importance, dans la mesure où, vue de côté, elle ne dépasse pas d'une face **51** avant de la face **6** de monture.

Une deuxième étape consiste à ajouter à l'ébauche **37** la matière des appuis **11** nasaux selon les contours de l'esquisse **47** (et plus précisément selon la courbe **48** arrière). Cette étape peut être conduite par une fonction d'extrusion de l'esquisse **47** perpendiculairement au plan **M** médian, en utilisant comme limites le bord **40** interne et un bord **52** externe du cerclage **7.** Selon les systèmes de CAO, cette limite peut être appliquée de manière automatique, ou il peut être nécessaire d'appliquer à la suite de l'extrusion une fonction d'enlèvement de matière pour découper cette extrusion aux limites constituées par les bords **40, 52** du cerclage **7.** Si le système ne peut lui-même ajuster l'extrusion à la gorge **38,** dont on rappelle qu'elle est creusée dans le - bord **40** interne du cerclage **7,** il peut alors être nécessaire d'intervertir les étapes de réalisation de l'esquisse **47** d'appui nasal et de creusement de la gorge **38** (par soustraction de la nappe **46** élargie à l'ébauche de la face **6** de monture), voire d'intervertir les opérations de réalisation de la gorge **38** et de réalisation de l'appui **11** nasal.

Une fois une ébauche d'appui **11** nasal réalisée sur l'un des cerclages **7, 8,** l'autre ébauche d'appui **11** nasal peut être obtenue par une simple opération de symétrie par rapport au plan **M** médian. En variante, l'extrusion (et éventuellement la découpe) des appuis **11** nasaux peuvent être effectuées simultanément, si le système de CAO propose une option d'extrusion bidirectionnelle.

L'ébauche **37** de la face **6** de monture pourvue de ses ébauches d'appuis **11** nasaux (et de ses gorges **38**) est illustrée sur la figure 19.

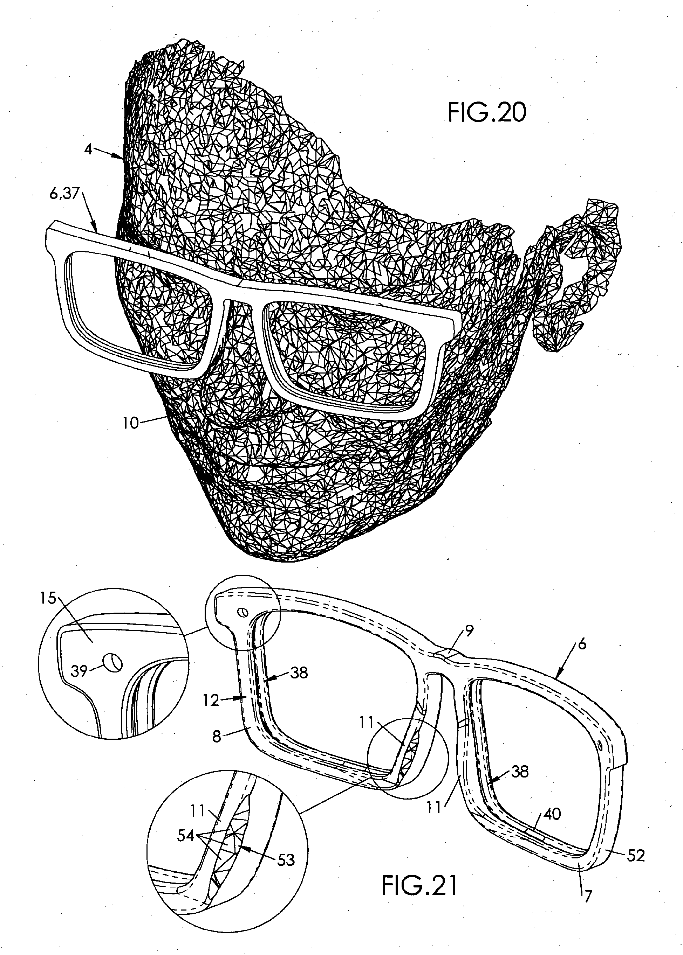

Une troisième étape consiste à ajuster au visage **4** l'ébauche **37** de la face **6** de monture (pourvue de ses appuis **11** nasaux) pour la placer dans une position de port normal, comme si un essai réel de la monture **2** était réalisé sur le porteur **3** lui-même. Cet ajustage peut être effectué par une combinaison de translations suivant trois axes perpendiculaires deux à deux, et de trois rotations autour de ces axes, jusqu'à parvenir à un positionnement correct (position de port normal, comme illustré sur la figure 20) dans lequel les ébauches des appuis **11** nasaux rentrent partiellement dans les ailes du nez **10** du visage **4.**

Une quatrième étape consiste à soustraire à l'ébauche **37** de la face **6** de monture la partie de matière des ébauches des appuis **11** nasaux rentrant dans les ailes du nez **10,** tel que déterminée par le positionnement correct effectué à l'étape précédente d'ajustage. Cet enlèvement de matière peut être réalisé par une fonction d'intersection appliquée à l'ébauche **37** de la face **6** de monture, et ayant pour surface limite le visage **4** (et plus précisément les ailes du nez **10**).

Il en résulte sur chaque appui **11** nasal un méplat **53** à l'empreinte de l'aile correspondante du nez **10.** Sur la figure 21, ce méplat **53** comprend plusieurs facettes **54,** qui résultent de la nature facettisée du visage **4** dans l'environnement du système CAO choisi pour réaliser les dessins ci-joints. En réalité, l'utilisation d'une résolution plus fine (voire même un mode surfacique non facettisé) pour le chargement (et l'affichage) du visage **4** peut, sur la face **6** de monture, faire disparaître (ou rendre invisibles) ces facettes **54.** Si la priorité est donnée à la productivité et nécessite, pour limiter le temps de calcul, l'utilisation d'une résolution grossière (telle qu'illustrée pour les besoins du présent brevet) dans le chargement du visage **4**, alors une opération ultérieure de finition à la main (par ex. de ponçage et/ou de polissage) peut se révéler nécessaire pour atténuer les arêtes séparant les facettes **54**, voire même pour faire disparaître les facettes **54** en conférant au méplat **53** un aspect lisse.

Il en résulte un parfait ajustement, sur le visage **4**, de la face **6** de monture, qui est ainsi précisément réalisée sur mesure. Cet ajustement maximise la surface de contact entre les arêtes du nez **10** et les appuis **11** nasaux, au bénéfice :
- du confort en raison d'une bonne répartition du poids de la face **6** de monture sur les ailes du nez **10** - en d'autres termes, la pression exercée sur les ailes du nez **10** par les appuis **11** nasaux est minimisée,
- de la tenue de la face **6** de monture en raison des efforts de frottements accrus entre les appuis **11** nasaux et les ailes du nez **10.**

L'opération suivante consiste à percer des avant-trous **39** dans la face **12** arrière de la face **6** de monture, au niveau des tenons **15** (cf. le médaillon de détail supérieur sur la figure 21), ce qui peut être réalisé par enlèvement de matière extrudé à partir d'un plan parallèle au plan **F** de face, ayant pour courbe guide une esquisse circulaire. Chaque avant-trou **39** est destiné à assurer la fixation d'une paumelle **55** de charnière **14,** comme cela sera expliqué ci-après.

La dernière opération réalisée sur la face **6** de monture consiste à casser ou (de préférence) adoucir ses arêtes, par ex. au moyen d'une fonction chanfrein ou, respectivement (et de préférence), une fonction congé. Un rayon de congé compris entre 0,1 mm et 2 mm peut convenir.

La conception de la face **6** de monture étant ainsi achevée, il convient alors de concevoir les branches **13.**

On suppose que le visage **4** du porteur **3** est sensiblement symétrique, c'est-à-dire que les oreilles **5** sont situées à une distance identique des yeux. Dans ce cas, la modélisation d'une branche **13** est suffisante, l'autre branche **13** pouvant être déduite par simple symétrie, fonction disponible sur la plupart des systèmes CAO.

Cette conception comprend plusieurs étapes.

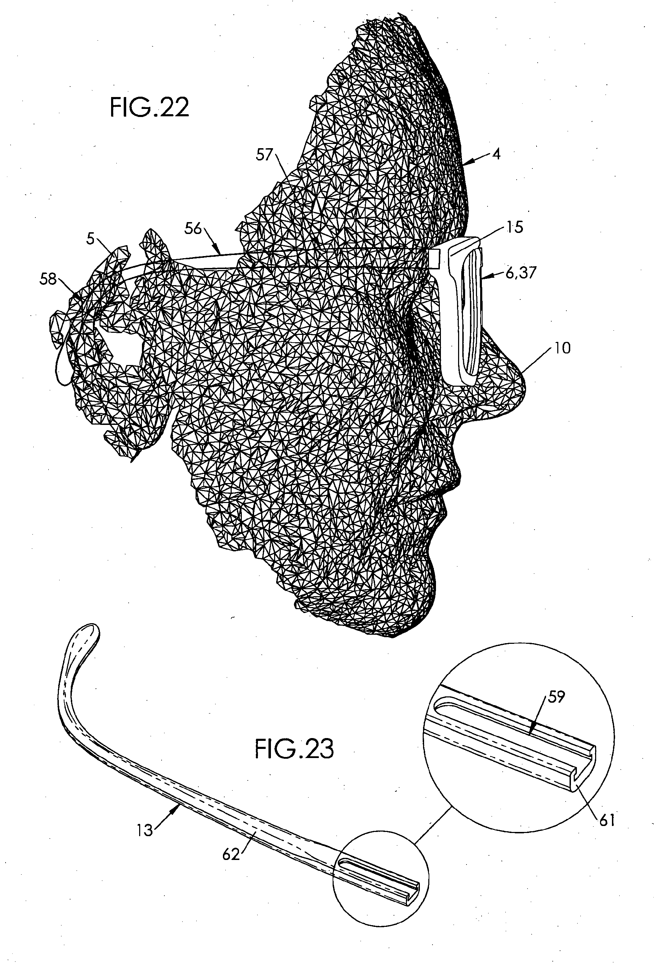

Une première étape consiste à tracer, dans un plan de côté parallèle au plan **M** médian, ou directement dans celui-ci, une esquisse **56** de la branche superposée au visage **4** et à la face **6** de monture telle que positionnée lors de l'étape d'ajustage précitée, comme illustré sur la figure 22.

Comme on le voit sur cette figure, l'esquisse **56** prend naissance au niveau du tenon **15** (auquel la branche **13** est destinée à être fixée), comprend une portion **57** principale sensiblement droite et se termine par une portion **58** d'extrémité arrière courbée, destinée à constituer un crochet de retenue de la monture **2** derrière le pavillon de l'oreille **5.**

Une deuxième étape consiste à ébaucher la branche **13** en donnant du volume à l'esquisse **56,** par ex. au moyen d'une fonction d'extrusion disponible sur tous les systèmes CAO.

Une troisième étape consiste à pratiquer une échancrure **59** destinée à accueillir une ferrure **60** de charnière, comme il sera expliqué ci-après. Selon un mode de réalisation illustré sur la figure 23, cette échancrure **59** se présente sous forme d'une rainure débouchant sur une face **61** d'extrémité avant de la branche **13,** à section transversale en forme de queue d'aronde ou (comme dans l'exemple illustré) en forme de T inversé.

Une quatrième étape consiste à casser les arêtes de l'ébauche de la branche **13,** par ajout d'un chanfrein ou d'un congé **62,** comme illustré sur la figure 23.

Ceci achève la phase de conception de la monture **2.**

La phase de fabrication peut comprendre une étape préparatoire de choix de l'orientation spatiale des pièces à fabriquer : face **6** de monture, branches **13.** En effet, la plupart des imprimantes 3D prévoient, pour les pièces cintrées ou courbées (comme la face **6** de monture) de combler les volumes vides séparant la pièce du plateau **26** de travail au moyen d'un support généré automatiquement et qui peut être réalisé dans le même matériau que la pièce à fabriquer, ou dans une autre matière destinée à être jetée ou recyclée (typiquement une cire hydrosoluble ou thermofusible).

Dans l'exemple illustré, la face **6** de monture est positionnée face **12** arrière vers le bas (c'est-à-dire en regard du plateau **26** de travail), ce qui minimise la quantité de matière support gaspillée.

Selon la capacité du plateau **26** de travail, les branches **13** peuvent être fabriquées dans le même cycle de production que la face **6** de monture, c'est-à-dire qu'à chacun de ses passages, la tête **27** d'impression dépose de la matière à la fois pour la fabrication de la face **6** de monture et pour la fabrication des branches **13.**

De même, plusieurs faces **6** de montures et/ou plusieurs paires de branches **13** peuvent être fabriquées dans le même cycle, de manière à optimiser le rendement de production.

Une fois fabriquées la face **6** de monture et les branches **13**, une phase de post-traitement (manuel et/ou mécanisé) peut être initiée, selon la finition des pièces fabriquées (état de surface, bavures). Si la finition est grossière, la phase de post-traitement comprend par ex. une ou plusieurs opération(s) de ponçage, à l'aide par ex. d'un papier, d'un tissu ou encore d'un bloc abrasif.

Une ou plusieurs opérations de polissage de la face **6** de monture et/ou des branches **13** peuvent également être prévues, au moyen d'un tissu ou d'une mousse, avec ou sans ajout de produit de polissage.

La phase de traitement peut également comprendre une opération de cintrage des branches **13**, à froid ou à chaud, pour bien les ajuster aux oreilles **5.**

La phase de post-traitement peut en outre comprendre une ou plusieurs opérations de peinture, de vernissage, ou encore de laquage de la face **6** de monture et/ou des branches **13.**

Une fois ce post-traitement accompli, il reste à assembler la monture **2** en fixant chaque branche **13** sur la face **6** de monture au moyen d'une charnière **14.**

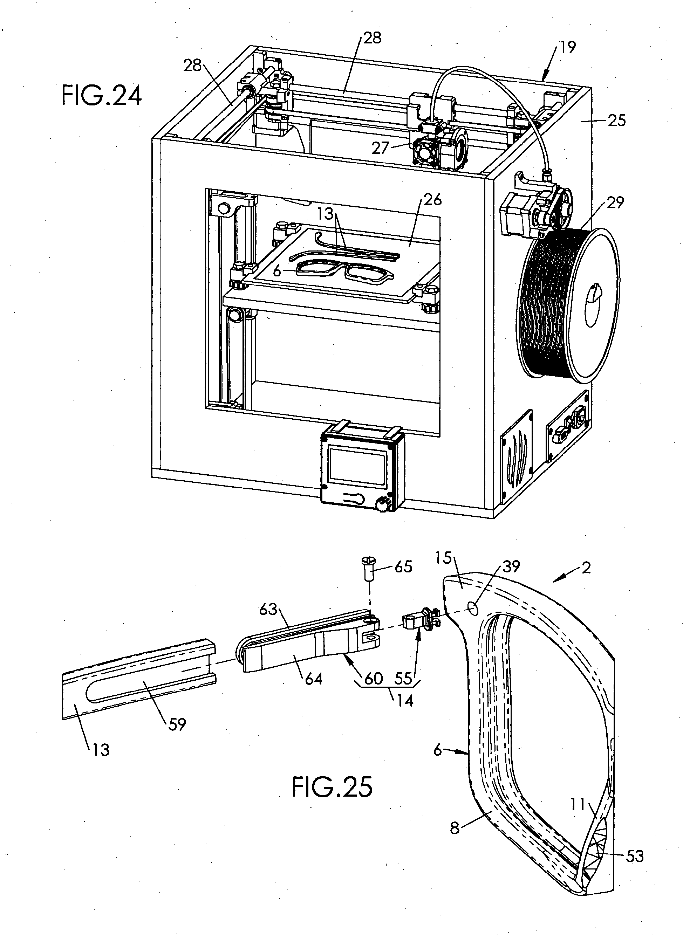

Dans l'exemple illustré, chaque charnière **14** comprend :
- une paumelle **55** (de préférence métallique) qui est rigidement fixée dans la face **6** de monture, du côté de sa face **12** arrière en étant fichée dans un avant-trou **39** (une étape de chauffe locale de la paumelle **55** à une température supérieure à la température de fusion de la matière de la face **6** de monture est préférable pour faciliter l'incrustation à chaud de la paumelle **55** dans son avant-trou **39)** ;
- une ferrure **60** (de préférence également métallique), qui est montée dans la branche **13.** Selon un mode de réalisation illustré sur la figure 25, la ferrure **60** comprend une embase **63** de forme complémentaire de la rainure **59** pratiquée dans la branche **13,** dans laquelle elle est incrustée à force (de préférence à chaud, avec chauffe de la ferrure **60** à une température supérieure à la température de fusion de la matière de la branche **13** pour faciliter l'incrustation à chaud de la ferrure **60** dans la rainure **59**), et un corps **64** monté coulissant sur l'embase **63** avec interposition d'un ressort de rappel (permettant un écartement des branches **13** au-delà d'une position de port perpendiculaire à la face **6** de monture, avec effet de rappel vers cette position de port) ; dans l'exemple illustré, le corps **64** définit une chape pour la fixation en rotation, au moyen d'une vis **65**, de la ferrure **60** sur la paumelle **55**.

Cette phase d'assemblage achevée, les lentilles peuvent être montées.

Comme la fabrication d'une paire de lunettes sur mesure implique la fourniture de lentilles brutes (qu'il s'agisse de lentilles solaires ou ophtalmiques, ou de lentilles à la fois solaires et ophtalmiques), une première opération consiste, à partir des lentilles brutes (généralement dans une matière organique), à les détourer au contour des cerclages **7**, **8** de la face **6** de monture.

Le détourage peut être réalisé de manière bien connue en plusieurs étapes au moyen d'une machine équipant ordinairement les opticiens.

Une première étape consiste à palper les gorges **38** formées dans chaque cerclage **7**, **8**, au moyen d'un palpeur. Le contour ainsi palpé est numérisé et mémorisé dans la machine (étape de palpage). En variante, l'étape de conception de la face **6** de monture est mise à profit, le profil de chaque gorge correspondant au chant de la nappe **46** élargie. Ce profil peut ainsi être exploité numériquement sans qu'il soit nécessaire de procéder au palpage de la gorge **38** sur la face **6** de monture fabriquée.

Une deuxième étape consiste à monter la lentille brute sur une ventouse positionnée selon un axe prédéterminé de la lentille, généralement son axe optique (étape de ventousage).

Une troisième étape consiste à meuler le chant de la lentille suivant le contour mémorisé à la première étape (étape de meulage). Le meulage est généralement réalisé sous lubrification, pour éviter toute surchauffe du chant en raison de son abrasion, et limiter ainsi le risque d'altération du matériau, soit mécanique (par apparition de microfissures), soit optique (par modification de l'indice de réfraction).

Le détourage est généralement suivi d'une opération de finition comprenant le meulage à la main de chanfreins sur le chant de la lentille ainsi détourée.

Chaque lentille ainsi détourée et finie peut alors être montée dans la face **6** de monture. Le montage peut être réalisé par clippage à froid. Toutefois, afin de faciliter cette opération et éviter que l'opérateur ne doive trop forcer sur la face **6** de monture lors du montage, il est préférable que celle-ci soit chauffée (par ex. par flux d'air chaud ou par infrarouge) à une température suffisante pour ramollir la matière, typiquement de l'ordre de 50°C à 60°C pour l'ABS.

Une fois ainsi ramollie la face **6** de monture, les lentilles sont montées par simple encliquetage dans les cerclages **7**, **8**. Après que la face **6** de monture a refroidi (après quelques secondes, quelques minutes tout au plus), elle retrouve sa rigidité et les lentilles se trouvent ainsi enchâssées rigidement dans leurs cerclages **7**, **8** respectifs.

En général, l'opticien chargé de la livraison de la paire de lunettes opère enfin, avant de la livrer au porteur, une vérification finale du centrage optique des lentilles (dans le cas de lentilles ophtalmiques), au moyen d'une machine dédiée.

## Revendications

1. Procédé de fabrication d'une face **(6)** de monture de lunettes pour un porteur **(3),** qui comprend :
- une phase d'acquisition optique de données spatiales relatives au visage **(4)** du porteur **(3)** ;
- une phase de conception, à partir de ces données, d'un modèle virtuel tridimensionnel de la face **(6)** de monture ; ladite phase de conception comprenant le chargement d'un modèle virtuel tridimensionnel de visage (4) construit à partir des données spatiales issues de la phase d'acquisition ;
- une phase de réalisation de la face **(6)** de monture par fabrication additive à partir de ce modèle virtuel ; ce procédé étant **caractérisé en ce que** la phase de conception
comprend aussi les opérations suivantes, conduites au sein d'un système de conception assistée par ordinateur :
- chargement ou tracé, dans un plan **(F)** de face, d'une esquisse **(30)** définissant les contours de la face **(6)** de monture ;
- à partir du modèle virtuel tridimensionnel de visage **(4)** :
∘ chargement ou tracé, dans un plan horizontal, d'une esquisse **(31)** primaire suivant la courbure du visage vu dans ce plan ;
∘ chargement ou tracé, dans un plan vertical parallèle à un plan **(M)** médian de relative symétrie du visage **(4),** d'une esquisse **(34)** secondaire suivant la courbure du visage **(4)** vu dans ce plan **(M),**
- construction d'une nappe **(35)** tridimensionnelle s'appuyant à la fois sur l'esquisse **(31)** primaire et sur l'esquisse **(34)** secondaire ;
- obtention d'une ébauche **(37)** de la face **(6)** de monture par découpe, dans la nappe **(35),** de la projection de son esquisse **(30)** sur celle-ci perpendiculairement au plan **(F)** de face.

2. Procédé selon la revendication 1, **caractérisé en ce que** l'opération de construction de la nappe **(35)** tridimensionnelle comprend :
- la construction d'une nappe **(36)** surfacique par balayage de l'esquisse **(31)** primaire sur l'esquisse **(34)** secondaire ou réciproquement ;
- l'épaississement de la nappe **(36)** surfacique.

3. Procédé selon la revendication 1 ou la revendication 2, **caractérisé en ce que** la phase de conception comprend la réalisation, dans l'ébauche **(37)** de la face **(6)** de monture, d'une gorge **(38)** destinée à accueillir une lentille.

4. Procédé selon la revendication 3, **caractérisé en ce que** la réalisation de la gorge **(38)** comprend :
- la conversion d'une arête **(41)** de l'ébauche **(37)** en courbe fermée tridimensionnelle ;
- la réalisation d'une surface **(42)** ayant pour contour cette courbe fermée tridimensionnelle ;
- le décalage de cette surface **(42)** perpendiculairement au plan (F) de face ;
- l'épaississement de la surface **(43)** ainsi décalée pour former une nappe **(44)** tridimensionnelle ;
- le décalage, vers l'extérieur, d'un chant **(45)** de la nappe **(44)** pour former une nappe **(46)** élargie ;
- la soustraction booléenne de cette nappe **(46)** élargie à l'ébauche **(37)** de la face **(6)** de monture.

5. Procédé selon la revendication 3, **caractérisé en ce que** la réalisation de la gorge **(38)** comprend :
- la conversion d'une arête **(41)** de l'ébauche **(37)** en courbe fermée tridimensionnelle ;
- le décalage de cette courbe vers l'extérieur ;
- le décalage de cette courbe perpendiculairement au plan de face vers l'intérieur de l'ébauche ;
- l'enlèvement extrudé, dans l'ébauche, de matière s'appuyant sur cette courbe ainsi fermée, effectué perpendiculairement au plan de face.

6. Procédé selon l'une des revendications précédentes, **caractérisé en ce que** la phase de conception comprend le chanfreinage ou l'arrondi des arêtes vives de l'ébauche **(37).**

7. Procédé selon l'une des revendications précédentes, **caractérisé en ce que** la phase de conception comprend le perçage d'avant-trous **(39)** dans une face **(12)** arrière de l'ébauche **(37).**

8. Procédé selon l'une des revendications précédentes, **caractérisé en ce que** la face **(6)** de monture est fabriquée dans un polymère.

9. Procédé de fabrication d'une paire de lunettes pour un porteur, qui comprend :
- la fabrication d'une face **(6)** de monture selon l'une des revendications précédentes,
- la fourniture ou la fabrication de branches **(13)** ;
- la fourniture de lentilles brutes,
- le détourage de lentilles au contour de la face **(6)** de monture,
- le montage des lentilles dans la face **(6)** de monture.

10. Procédé selon la revendication 9, qui comprend une phase de conception, à partir du modèle virtuel tridimensionnel de visage **(4),** et à partir du modèle virtuel tridimensionnel de face **(6)** de monture, d'un modèle virtuel tridimensionnel de branche **(13),** une phase de réalisation d'une paire de branches **(13)** par fabrication additive à partir de ce modèle virtuel, et une phase d'assemblage comprenant la fixation de chaque branche **(13)** sur la face **(6)** de monture au moyen d'une charnière **(14).**

## Patentansprüche

1. Verfahren zur Herstellung einer Brillenfassungsseite (6) für einen Träger (3), das umfasst:
- eine Phase zur optischen Erfassung von räumlichen Daten in Bezug auf das Gesicht (4) des Trägers (3);
- eine Phase zur Gestaltung aus diesen Daten eines dreidimensionalen virtuellen Modells der Fassungsseite (6);
wobei die Phase zur Gestaltung das Laden eines dreidimensionalen virtuellen Modells eines Gesichts (4) umfasst, das aus den räumlichen Daten aus der Phase zur Erfassung erstellt wird;
- eine Phase zum Realisieren der Fassungseite (6) durch additives Herstellen aus diesem virtuellen Modell;
wobei dieses Verfahren **dadurch gekennzeichnet ist, dass** die Phase zur Gestaltung auch die folgenden Vorgänge umfasst, die innerhalb eines durch einen Computer unterstützten Gestaltungssystems durchgeführt werden:
- Laden oder Einzeichnen auf einer Seitenebene (F) einer Skizze (30), welche die Konturen der Fassungsseite (6) definiert;
- aus dem dreidimensionalen virtuellen Modell eines Gesichts (4):
-- Laden oder Einzeichnen auf einer horizontalen Ebene einer primären Skizze (31) gemäß einer Rundung des auf dieser Ebene gesehenenen Gesichtes;
-- Laden oder Einzeichnen auf einer vertikalen Ebene parallel zu einer relativen Symmetriemittelebene (M) des Gesichts (4) einer sekundären Skizze (34) gemäß der Rundung des auf dieser Ebene (M) gesehenenen Gesichtes (4),
- Aufbau einer dreidimensionalen Lage (35), die sich gleichsam auf die primäre Skizze (31) und auf die sekundäre Skizze (34) stützt;
- Erhalt eines Entwurfs (37) der Fassungsseite (6) durch Ausschneiden aus der Lage (35) der Projektion ihrer Skizze (30) auf diese, senkrecht zu der Seitenebene (F).

2. Verfahren nach Anspruch 1, **dadurch gekennzeichnet, dass** der Aufbauvorgang der dreidimensionalen Lage (35) umfasst:
- den Aufbau einer Oberflächenlage (36) durch Scannen der primären Skizze (31) auf die sekundäre Skizze (34) oder umgekehrt;
- die Verdickung der Oberflächenlage (36).

3. Verfahren nach Anspruch 1 oder Anspruch 2, **dadurch gekennzeichnet, dass** die Phase zur Gestaltung die Realisierung einer Nut (38) im Entwurf (37) der Fassungsseite (6) umfasst, die dazu bestimmt ist, eine Linse aufzunehmen.

4. Verfahren nach Anspruch 3, **dadurch gekennzeichnet, dass** die Realisierung der Nut (38) umfasst:
- die Umwandlung eines Grats (41) des Entwurfs (37) in eine dreidimensionale geschlossene Biegung;
- die Realisierung einer Oberfläche (42), die diese dreidimensionale geschlossene Biegung als Kontur aufweist;
- den Versatz dieser Oberfläche (42) senkrecht zur Seitenebene (F);
- die Verdickung der so versetzten Oberfläche (43) zur Bildung einer dreidimensionalen Lage (44);
- den Versatz nach außen einer Kante (45) der Lage (44) zum Bilden einer erweiterten Lage (46);
- das boolesche Abziehen dieser erweiterten Lage (46) von dem Entwurf (37) der Fassungsseite (6).

5. Verfahren nach Anspruch 3, **dadurch gekennzeichnet, dass** die Realisierung der Nut (38) umfasst:
- die Umwandlung eines Grats (41) des Entwurfs (37) in eine dreidimensionale geschlossene Biegung;
- den Versatz dieser Biegung nach außen;
- den Versatz dieser Biegung senkrecht zu der Seitenebene zur Innenseite des Entwurfs;
- das extrudierte Entfernen auf dem Entwurf von Material, das sich an dieser so geschlossenen Biegung anlegt, das senkrecht zu der Seitenebene durchgeführt wird.

6. Verfahren nach einem der vorstehenden Ansprüche, **dadurch gekennzeichnet, dass** die Phase zur Gestaltung das Anfasen oder Abrunden der scharfen Kanten des Entwurfes (37) umfasst.

7. Verfahren nach einem der vorstehenden Ansprüche, **dadurch gekennzeichnet, dass** dass die Phase zur Gestaltung das Bohren von Pilotlöchern (39) in eine Rückseite (12) des Entwurfes (37) umfasst.

8. Verfahren nach einem der vorstehenden Ansprüche, **dadurch gekennzeichnet, dass** die Fassungsseite (6) aus einem Polymer gefertigt wird.

9. Verfahren zur Herstellung einer Brille für einen Träger, das umfasst:
- das Herstellen einer Fassungsseite (6) nach einem der vorstehenden Ansprüche,
- das Bereitstellen oder das Herstellen von Bügeln (13) ;
- das Bereitstellen von ungeschliffenen Linsen,
- das Zurechtschneiden der Linsen auf die Kontur der Fassungsseite (6),
- das Einsetzen der Linsen in die Fassungsseite (6) .

10. Verfahren nach Anspruch 9, das eine Phase zur Gestaltung aus einem dreidimensionalen virtuellen Modell eines Gesichts (4) und aus einem dreidimensionalen virtuellen Modell einer Fassungsseite (6), eines dreidimensionalen virtuellen Modells eines Bügels (13), eine Phase des Realisierens eines Paares von Bügeln (13) durch additives Herstellen aus diesem virtuellen Modell, und eine Phase zum Zusammensetzen, umfassend das Fixieren jedes Bügels (13) an der Fassungsseite (6) anhand eines Scharniers (14) umfasst.

## Claims

1. A method of manufacturing a spectacle frame face (6) for a wearer (3), comprising:
- an optical acquisition phase of spatial data relating to the face (4) of the wearer (3);
- a design phase, from these data, of a three-dimensional virtual model of the frame face (6);
- said design phase comprising loading a three-dimensional virtual face model (4) constructed from the spatial data derived from the acquisition phase;
- a phase of production of the frame face (6) by additive manufacturing from this virtual model;
this method being **characterized in that** the design phase also comprises the following operations, carried out within a computer-assisted design system:
- loading or drawing, in a front plane (F), sketch (30) defining the contours of the frame face (6);
- from the three-dimensional virtual model of face (4):
• loading or drawing, in a horizontal plane, a primary sketch (31) following the curvature of the face seen in this plane;
• loading or drawing, in a vertical plane parallel to a median plane (M) of relative symmetry of the face (4), a secondary sketch (34) following the curvature of the face (4) seen in this plane (M),
- constructing a three-dimensional web (35) based on both the primary sketch (31) and the secondary sketch (34);
- obtaining a blank (37) of the frame face (6) by cutting, in the web (35), the projection of its sketch (30) thereon perpendicularly to the front plane (F).

2. A method according to claim 1, **characterized in that** the step of constructing the three-dimensional web (35) comprises:
- constructing a surface web (36) by sweeping the primary sketch (31) on the secondary sketch (34) secondary or vice versa;
- thickening the surface web (36).

3. A method according to claim 1 or claim 2, **characterized in that** the design phase comprises producing, in the blank (37) of the frame face (6), a groove (38) for receiving a lens.

4. A method according to claim 3, **characterized in that** the production of the groove (38) comprises:
- converting an edge (41) of the blank (37) into a closed three-dimensional curve;
- producing a surface (42) having the contour of this closed three-dimensional curve;
- offsetting this surface (42) perpendicularly to the front plane (F); thickening the surface (43) thus shifted to form a three-dimensional web (44);
- outwardly shifting an edge (45) of the web (44) to form a widened web (46);
- Boolean subtracting this widened web (46) from the blank (37) of the frame face (6).

5. A method according to claim 3, **characterized in that** the producing of the groove (38) comprises:
- converting an edge (41) of the blank (37) into a three-dimensional closed curve;
- shifting this curve outwards;
- offsetting this curve perpendicular to the plane of the face towards the inside of the blank;
- extruded removing, in the blank, of material based on this closed curve, made perpendicularly to the front plane.

6. Method according to any of the preceding claims, **characterized in that** the design phase comprises chamfering or rounding of the sharp edges of the blank (37).

7. Method according to one of the preceding claims, **characterized in that** the design phase comprises the drilling of pilot holes (39) in a rear face (12) of the blank (37).

8. Method according to one of the preceding claims, **characterized in that** the frame face (6) is made of a polymer.

9. A method of manufacturing a pair of eyeglasses for a wearer, which comprises:
- manufacturing a frame face (6) according to one of the preceding claims,
- supplying or making stems (13);
- supplying raw lenses,
- trimming the lenses to the contour of the frame face (6),
- mounting the lenses in the frame face (6).

10. A method according to claim 9, which comprises
- a design phase, from the three-dimensional virtual face model (4), and from the three-dimensional virtual face frame model (6), of a three-dimensional virtual model of a stem (13),
- a phase of making a pair of stems (13) by additive manufacturing from this virtual model, and an assembly phase comprising the fixing of each stem (13) on the frame face (6) by means of a hinge (14).
